# EUROPEAN PATENT APPLICATION

(11) **EP 4 840 577 A1**
(43) Date of publication of application: **18.11.2026**
(21) Application number: 25175796.9
(22) Date of filing: 12.05.2025
(51) Int. Cl.: B23K 26/38

(54) **FLATBED LASER CUTTING MACHINE, SYSTEM AND METHOD**

(71) Applicant: Bystronic Laser AG, 3362 Niederönz (CH)
(72) Inventor: BERGER, Michael, 3005 Bern (CH); BURRI, Markus, 3400 Burgdorf (CH); BEUTLER, Beat, 3363 Oberönz (CH); LÜDI, Andreas, 3400 Burgdorf (CH)
(74) Representative: Frei Patent Attorneys

(57) **Abstract**

The present disclosure concerns a laser cutting method for cutting out a part (1) from a workpiece that defines a workpiece plane. While the workpiece plane lies horizontally, a first cut (6) and a second cut (5) are made in the workpiece. The second cut (5) is a cut along a contour of the part (1) and thereby delimits the part (1) and separates it from a workpiece remainder, and the first cut (6) delimits, together with the second cut (5), a retention element (4) of the workpiece remainder (2). The method comprises causing the retention element (4) to bend away from the workpiece plane, downwardly, in addition to bending inwardly towards the part in a position in which a portion (14) of the retention element (4) is underneath the part (1) to support the part (4).

## Description

The invention is in the field of thermal cutting machines, in particular laser cutting machines, namely flatbed laser cutting machines for cutting flat workpieces, for example sheet metal. In particular, it relates to a method and to a laser processing machine programmed to carry out the method.

In laser cutting machines, in particular flatbed laser cutting machines, a laser cutting head moves relative to a workpiece placed on a workpiece support. At locations where a cut is to be made, the laser cutting head emits laser radiation towards the workpiece and often also ejects a jet of an assist gas. After the desired parts have been cut out of the workpiece - which for example may be a metallic sheet/plate - they lie flat on the workpiece support until they are removed, usually after an entire cutting process that may involve cutting out a large number of parts.

It may, however, happen that a cut-out part instead of lying flat tilts on the workpiece support or even falls down through a grid that forms the workpiece support. This may especially happen if the workpiece support forms a grid of support spots on which the workpiece lies, and if the cut-out part in at least one horizontal dimension does not extend over a large number of such support spots, and/or due to an assist gas jet that displaces the cut-out part in the course of the cutting action. A tilted cut-out part may interfere with operation of the laser cutting machine, firstly because of collisions with the laser cutting head during the cutting process, when the laser cutting head moves from one cutting location to another cutting location, and secondly, because tilted or displaced parts may interfere with operation when the parts are to be removed from the workpiece support for further processing. Therefore, in the prior art so-called micro-joints were suggested. Such micro-joints are spots where the cut-out parts are not completely separated from the remainder of the workpiece. Micro-joints - including so-called nano-joints, being micro-joints with reduced thickness - however, have the disadvantage that a force is required for separating the cut-out parts after the cutting process. A further disadvantage is that residues of the micro-joint after separation usually have to be removed in a separate post-processing step after separation. Similar disadvantages arise if instead of micro-joints, welding spots are used to tack the cut-out parts to the remainder of the workpiece.

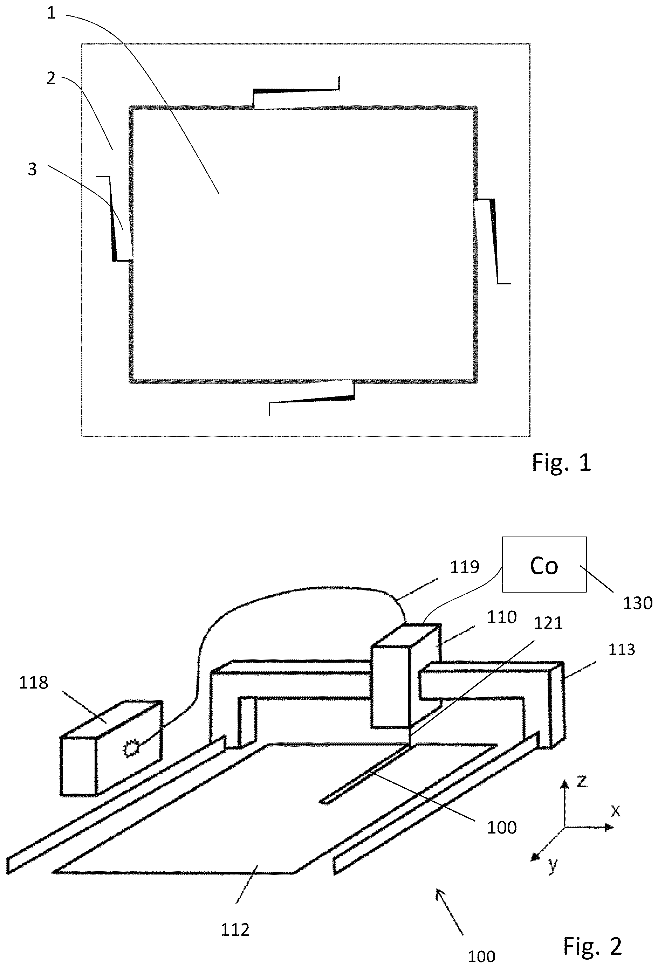

To avoid such disadvantages, EP3603874 A1 proposes so-called "soft joints" for holding the cut-out part relative to the remainder of the workpiece. **Figure 1** illustrates the principle thereof: A cut-out part 1 is clamped by finger-like pressing protrusions 3 that belong to remainder 2 of the workpiece and are deformed to be bent sideways so as to press against the peripheral surface of the cut-out part 1. The sideways deformation is due to residual stress in the workpiece material, which residual stress is caused by the heat that acts on the workpiece during the cutting operation of cutting the outline of the pressing protrusions 3 prior to cutting the outline of the cut-out part 1.

This innovative approach works well for some kinds of workpieces. However, especially if the workpiece is rather thick (more than about 3 mm) or rather thin (less than about 1 mm) the approach has been found to not lead to satisfactory results, as the cut-out parts are not clamped sufficiently reliably.

It is an object of the present invention to provide a method of operating a flatbed laser cutting machine overcoming disadvantages of prior art methods. It is a further object to provide a laser cutting machine programmed to carry out a method overcoming disadvantages of the prior art.

This object is achieved by the method and the machine as defined in the claims.

According to an aspect of the present invention, a laser cutting method for cutting out a part from a workpiece - which workpiece is a flat article, thus a sheet or plate, especially of a metal - that defines a workpiece plane is provided. The method comprises the steps of arranging the workpiece so that the workpiece plane lies horizontally, and of making a first cut and a second cut in the workpiece. The second cut is a cut along a contour of the part and thereby delimits the part and thereby separates it from a workpiece remainder. The first cut delimits, together with the second cut, a retention element next to the part, the retention element belonging to the workpiece remainder and extending away from a workpiece remainder body. In contrast to the prior art as described in EP3603874 A1, the method comprises causing the retention element to bend away from the workpiece plane in addition to bending inwardly towards the part in a position in which a portion of the retention element is underneath the part to support the part.

The laser processing beam in flatbed laser cutting machines impinges on the workpiece generally from above (the laser processing beam may be perpendicular to the upper surface of the workpiece or may be at a nonzero angle to the normal, for example depending on the chosen cutting regime). For several reasons, and depending on chosen parameters such as a vertical position of the focus and the relationship between average laser power and feed rate, there is a tendency during laser cutting that somewhat more radiation energy will be absorbed by the workpiece near the upper surface than near the lower surface, leading to a situation in which upper portions of the workpiece become somewhat hotter than lower portions. Reasons for this include the heating by outer, off-axis portions of the processing beams, which outer portions do not have sufficient intensity for locally melting the workpiece material (and hence cutting) but that nevertheless are absorbed by the workpiece material. A further reason may lie in the fact that depending on the dynamics a portion of the laser beam will have been absorbed already when the radiation reaches lower layers. This inhomogeneous heating results in a tendency of the upper side to expand more, so that a bar-shaped cut-out portion will have a tendency to bend away from the upper side. Because residual stresses remain also after the workpiece material has cooled again, such a downward bending may remain after cooling. While usually the cutting parameters are chosen in a manner that bending of cut-out portions of the workpiece out of the workpiece plane are avoided, the present invention is based on the insight that such bending may be used under the conditions discussed in the present text.

In embodiments, the retention element is generally elongate, with its long extension parallel to the part, being contiguous with the workpiece remainder body at one of its ends (at one narrow side), the other end being a free end.

In a first group of embodiments, the free end of the respective retention is caused to be underneath the part by the free end being deflected downwardly by at least a thickness of the workpiece.

This first group of embodiments is especially suited for relatively thin workpieces being sheets (metal sheets) having thicknesses of for example between 0.1 mm and about 4 mm or 3 mm - it not being excluded that also workpieces of more than 4 mm being treated by a method according to the first group of embodiments.

In a second group of embodiments, a portion the retention element has a support region of reduced thickness, also called "retention lug" in the present text. The second group of embodiments is especially suited for thicker workpieces, especially metal sheets (plates) having a thickness of at least 2 mm or at least 3 mm, a maximum being at thicknesses which make it difficult to laser cut at all, for example thicknesses of about 15 mm or 25 mm or more. The support region is a region in which an upper portion of the workpiece material is locally removed, for example by laser ablation, so that the support region is a region of the retention element having a reduced thickness (compared to the workpiece thickness. The support region is arranged at the free end of the retention element.

Laser ablation, used to locally remove workpiece material for generating the support region, may be achieved by causing the processing laser beam to impinge on the workpiece, but with reduced energy input per unit area compared to laser cutting - for example by means of reducing the average laser power (such as by pulsing), by increasing the feed rate (velocity by which the laser beam moves relative to the workpiece), by defocusing, dynamic beam shaping or other measure.

The support region may be separated from the part to be cut out by a (thin) separating cut or by the support region having a thickness that towards the part has a reduced thickness of zero or close to zero, whereby the free end of the retention element, which free end has the support region, is loose from the part as soon as it is free from the remainder of the workpiece.

The skilled person understanding the concept of the present invention will be able to identify measures for ensuring that the retention element is sufficiently bent (downward and then sideways, towards the part). Parameters that my influence the bending comprise:
- A width and length of the retention element (the length is the extension between the base end, at which it is connected to the workpiece remainder body, and the free end). Especially, a width of the retention element may be between 0.3 and 3 times the thickness of the workpiece, especially between 0.5 and 2 times or between 0.8 and 1.5 times this thickness, whereas a length of the retention element in embodiments may be at least 7 times or at least 10 times or at least 20 times the thickness and/or up to 100 times or 80 times or 50 times this thickness. The length may be at least 5 times, or at least 7 times or at least 10 times its width and/or up to 50 times or 100 times or more of its width These quantities especially hold for embodiments of the first group but also for embodiments of the second group
- A cutting sequence and cutting direction: in embodiments, the first cut is made before the second cut, and the first cut is made in a direction from the base towards the free end. The second cut, being an outline cut of the part to be cut, may be made, after the first cut, in a same direction as the first cut, thus also from the base towards the free end. In embodiments, a release cut along the free end is made, before or after the second cut, for example in an outward direction, thus from the second cut to the first cut.
- An auxiliary cut at the base may be made. Such auxiliary cut may be such as to reduce a width of the retention element at the base, and it connects to the first cut. An angle between the auxiliary cut and the first cut may be acute, especially less than 80°, for example between 4° and 45°, especially between 5° and 30°. It has been experimentally found that such auxiliary cut is beneficial for improving the bending movement of the retention element. In embodiments, the auxiliary cut can be made prior to the first cut. For example, it can lead into the first cut, so that the auxiliary cut and the first cut can be made in one go.
- The retention element, towards its free end, may be shaped such as to be undercut with respect to an inward bending of the retention element so that the retention element may bend inwardly only after having bent downwardly, to move the undercut feature to underneath the plane of the workpiece body so that the retention element will first bend downwardly and then inwardly. Such undercut may for example be formed by the retention element's free end forming a widened head.
- An additional heating step may be applied to an upper surface of the retention element, for example in a region of its base, to increase the downward bending (for example primarily in the region of the base), and/or specifically to portions closer to the part to be cut to increase an inward bending, for example in a region near the base. The additional heating may be caused by the process laser beam with an even more (compared to laser ablation) reduced energy input per unit area so that the energy input is not sufficient to melt. Reduction of the energy input per unit area may be achieved by one or more of reducing the average laser power (such as by pulsing), increasing the feed rate (velocity by which the laser beam moves relative to the workpiece), defocusing, dynamic beam shaping or other measure.

The method may additionally comprise the step of making a release cut along the free end of the retention element. The release cut in this connects the first cut and the second cut. It may be carried out after the first cut, and it may especially be carried out also after the second cut. The latter does not exclude the possibility that not all of an outline cut of the part, to which outline cut the second cut belongs (the second cut being the portion of the outline cut that extends along the retention element), is made in one go. For example, it is possible that after the second cut (the part of the outline cut along the retention element), the outline cut is interrupted for making the release cut. In many embodiments, it is even preferred if a last step of the outline cut is made after the retention element is released so that the portion of the retention element is underneath the part when the part is fully released from the remainder of the workpiece.

In many embodiments, a plurality of the retention elements will be cut out, using the technique described in the present text, for a part to be protected from tilting/falling down. Especially, the number of retention elements for a particular part may be chosen to be one, two, three, or four. Also higher numbers are possible and may be, depending on the part geometry, beneficial.

Depending on material properties, the skilled person may choose initial settings and an initial geometry of the retention elements. In this, she/he may for example also consider the location of grate elements of the support grating if known - for example the retention elements may be placed at locations where there is no support by a grate element or a small displacement or small tilting moment may lead to the workpiece falling down or tilting. In addition or as an alternative, the position of the retention element(s) may be defined so that there will not be any physical contact between a retention element and any of the grate elements.

After the initial settings and an initial geometry of the retention elements have been chosen, calculations and/or experiments may reveal whether this configuration results in desired bending of the retention elements. If not, measures may be taken along the lines of the above-mentioned teaching, such as adding an auxiliary cut, extending the length, adding a surface heating step of increasing the downward bending (for example primarily in the region of the base), etc. Experiments have shown that in many situations by far not all of these measures are required.

In addition to concerning a method of laser cutting, the present invention also concerns a flatbed laser cutting machine. The flatbed laser cutting machine comprises a workpiece support, for example constituted by a plurality of grate elements with empty spaces between the grate elements, so that parts, depending on their shape and size and circumstances, could tilt or fall down. The laser cutting machine further comprises a laser cutting head equipped to emit a processing beam and possibly also a jet of assist gas towards the workpiece supported by the workpiece support and to be movable relative to the workpiece support. The flatbed laser cutting machine in addition comprises an electronic control for controlling the movement of the laser cutting head as well as the emission of the laser processing beam and for example also a flow of the assist gas. The laser processing machine is programmed to carry out, using the control, the method as described in the present text.

In addition, the present invention also concerns a computer program, stored on a data carrier and/or downloadable, for example in the form of a plug-in for existing machine software or cutting plan preparation software, comprising instructions to cause, when executed on the machine control of the laser cutting machine or on a computer from which data are transferred to the laser cutting machine, a laser cutting machine to carry out the method. Moreover, it concerns a computer-readable data carrier having stored thereon the computer program, or data carrier signal carrying the computer program.

In the present text, the terms "horizontal" and "vertical" are, of course, not to be interpreted to define an orientation in the exact mathematical sense but to include the corresponding approximate orientations. In practice, the exact orientation of the workpiece plane depends on how a laser cutting machine is positioned and may depend on the evenness of the ground it is poisoned on. Small deviations from a perfectly horizontal plane are possible, which deviations may in practice be a few tens of millimetres per meter (of horizontal distance) or a millimetre a few millimetres per meter.

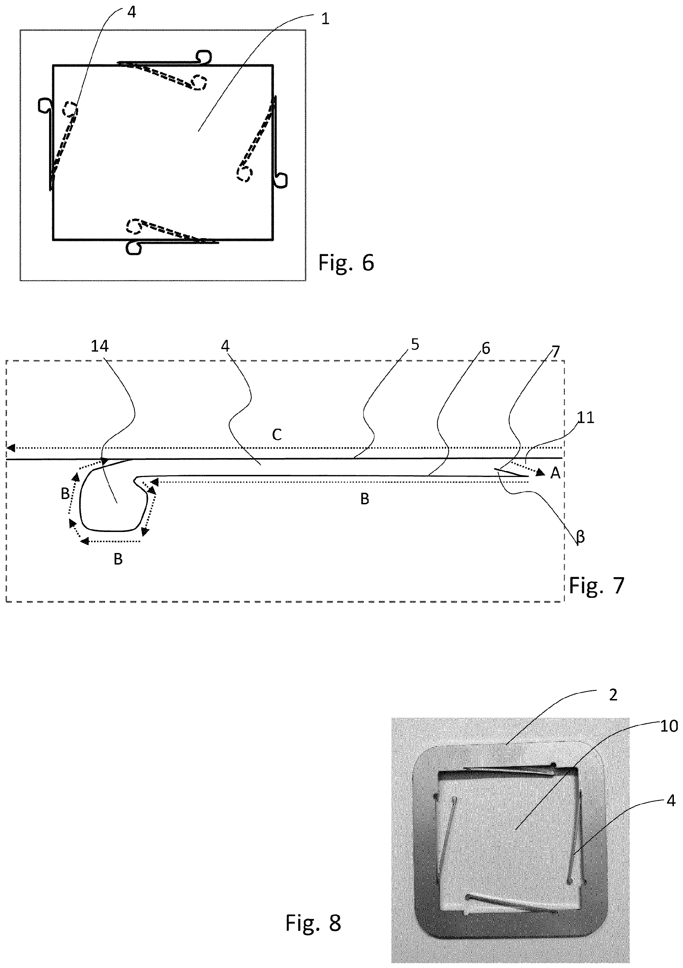

Hereinafter, embodiments of the present invention are described in more detail referring to drawings. In the drawings, same reference numbers refer to same or similar components. The drawings, with the exception of Fig. 8, are schematical and not to scale. They show:
- Fig. 1:: a cut-out part held by finger-like pressing protrusions, in an approach according to the prior art;
- Fig. 2: a laser cutting machine;
- Fig. 3: a workpiece support (only a few of the grate elements being shown);
- Fig. 4: a fist embodiment of a part cut out from a workpiece;
- Fig. 5: a region V of Fig. 4 in an enlarged view;
- Fig. 6: the embodiment of Fig. 4 with an illustration of the end position of the retention elements;
- Fig. 7: a variant of a retention element;
- Figs. 8 and 9: photographs of a workpiece remainder, based on the embodiment of Fig. 7, with Fig. 9 showing the workpiece remainder in an upside-down orientation;
- Fig. 10: yet another variant of a retention element;
- Fig. 11: a retention element according to the second group of embodiments;
- Fig. 12: a view of a workpiece with a cut-out part and a plurality of differently configured retention elements;
- Fig. 13: detail XIII of Fig. 12;
- Fig. 14: detail XIV of Fig. 12;
- Fig. 15: a view of a further workpiece with a cut-out part and a plurality of differently configured retention elements;
- Fig. 16: a section along the plane XVI-XVI of Fig. 15;
- Fig. 17: detail XVII of Fig. 16; and
- Fig. 18: the part as illustrated in Fig. 6 with retention elements as in Figure 2, with the positions of two cutting grid grate elements being show in dashed lines.

**Figure 2** shows an example of a laser cutting machine 100. The machine comprises a laser source 118 and a transport fiber 119, a laser cutting head 110, and a laser head moving mechanism. A workpiece 112 is supported by a workpiece support as described hereinafter. The laser cutting head moving mechanism comprises a bridge 113 relative to which the laser cutting head 110 is movable in x direction), and which itself is movable, for example on a pair or rails, in y direction relative to the working table and the workpiece 112. The workpiece 112 may be a metal sheet or metal plate that is cut by a laser beam 121 emitted by the laser cutting head 110. The laser beam 121 emitted by the laser cutting head 110 will generally propagate into the downward (-z)-Direction, but in embodiments, the laser cutting head 110 may be equipped to emit the laser beam 121 into non-vertical downward directions, i.e., into downward directions at an angle to the vertical z-axis. Also, in embodiments the laser cutting head 110 may be equipped to move into +/- z-directions and/or to change focusing parameters of the laser beam.

Also, in embodiments, the laser cutting head 110 may be equipped with zoom optics and/or with a beam shaping system, for example dynamic beam shaping system.

Fig. 2 also illustrates a machine control 130 equipped to control the laser cutting process by controlling the emission of the laser processing beam 121 and the movement of the laser cutting head 110 as well as, possibly, further parameters like the assist gas flow etc.

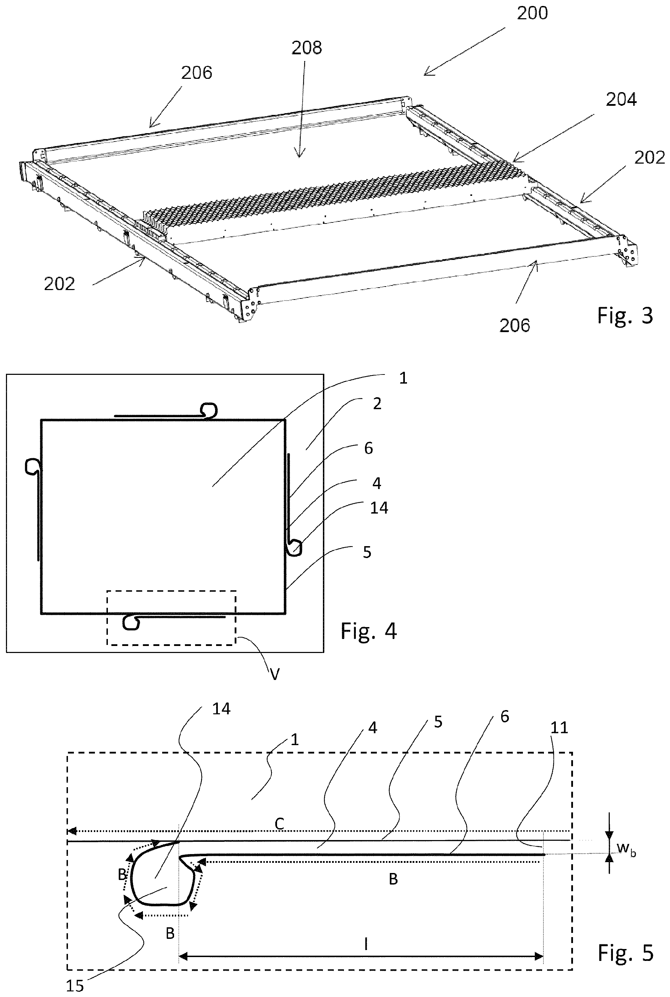

A workpiece support 200 is shown, in part, in **Figure 3****.** The workpieces support comprises a rectangular frame on which a plurality of grate elements 204 is mounted. Two support members 202 form, together with two transverse beams 206, the rectangular frame, which defines a grate space 208. The grate elements 204 are hinged on the support members 202. For ensuring a well-defined arrangement of the grate elements 204, the support members 202 may comprise positioning aids, such as notches arranged at regular distances from each other. In Fig. 2, only a small section of the grate space 208 is depicted to have grate elements 204; in practice for operation the whole grate space 208 or at least a major portion of it will comprise grate elements 204. In the depicted embodiment, the shape of the grate elements 204 is such that it is not straight on the upper, upwardly facing narrow side but has a structure forming an array of support protrusions sticking out upwardly, for example by the upwardly facing side having a sawtooth structure.

A distance between the grate elements 204 and, if applicable, a distance between the support protrusions is/are generally sufficiently small for a cut-out part to be supported so as to remain in an equilibrium after the cutting process. Nevertheless, there are configurations, especially with small or narrow cut-out parts, in which such support is not stable so that for example the processing gas flow could cause a part or other cut-out portion to tilt or even fall down, and/or in which during removal of the part and/or of the workpiece remainder, a part or other cut-out portion could tilt or fall down absent any additional measures.

**Figure 4** illustrates a first embodiment. The cut-out part 1 is shown together with the workpiece remainder 2 that has retention elements 4. **Figure 5** shows the detail V of Fig. 4, illustrating one of the retention elements in an enlarged view. The retention elements 4, similarly to the pressing protrusions 3 of the prior art approach of Fig. 1, extend along the outline cut 5 of the part 1, with its long extension parallel to the outline cut 5, and with a section of the outline cut also being a lateral boundary of the respective retention element 4. In contrast to the pressing protrusions 3 of the prior art, however, they are such that they bend laterally (i.e., horizontally, in x-y-directions) only after having bent vertically, i.e., downwardly, in -z- directions and/or together with bending downwardly.

Since the laser hits the contour of the retention element 4 to be cut from above, the upper side is heated more strongly. The retention element will have a tendency to bend in the direction of the cooler side, i.e., away from the heated side, namely downwards. This downward bending tendency is also supported by the fact that both, the web cut 6 and the outline cut 5 are made in the same directions B, C away from the base 11 (see especially Fig. 5). Because at the base 11, where the retention element 4 is connected to the workpiece remainder body, and along its length it is relative narrow (depicted is the base width *w_{b}*), and because the length *l* is substantial, the resulting bending may be sufficient to move the free end 14 down far enough to be underneath the workpiece plane. At the same time, the sequence of the cuts is chosen to cause the lateral bending as for example described in EP3603874 A1.

Residual stresses exist in the retention elements 4 due to the heat generated during laser cutting. When the outline cut 5 is made in the direction of arrow C after the web cut 6 has been formed in directions of arrow B (cf. Fig 5), the aforementioned residual stresses are released and the retention element 4 bends both downwards and in the direction of the cut part 1 due to the stresses.

In the depicted embodiment, the shape of the retention elements 4, is such that they have a head 15 at their respective free end 14 such that, together with the workpiece remainder body, an undercut is formed, the undercut preventing a direct lateral movement towards the part 1 as long as the head 15 is in the workpiece plane. When the retention element 4 is cut free with an outline cut 5 between the part 1 and the retention element 4, the retention element 4 will first bend downwards and then, as soon as the head 15 is below the workpiece by having moved by a distance corresponding to a workpiece thickness, also towards the part 1.

In embodiments without the head 15 causing an undercut between the retention elements and the workpiece remainder body, a lateral inward movement of the retention elements prior to the downward movement is prevented by the retention elements initially lying against the side of the part, thus by the part itself. Depending on a thickness of the workpiece, however, it may be beneficial for the stability if such initial lying against the part is prevented by the shape of the retention elements 4, as in the embodiment of Figs. 4 and 5.

**Figure 6** shows the situation with a cut part 1 and four retention elements 4. The four retention elements 4, which are bent downwards and inwards and come to lie with their free ends 14 under the cut part, are shown as dashed lines. Thereby, tilting or falling down of the part 1 can be reliably prevented without having to accept contour damage, and independent of the location of the grate elements of the support grid. It is also possible to automatically support the part without any problems. In addition, excessive jamming, as with soft joints, cannot occur.

**Figure 7** illustrates a variant of the embodiment of Figs. 4 and 5. It is distinct from the latter embodiment by comprising an auxiliary cut 7 at the base 11 of the retention element 4. The auxiliary cut 7 firstly has the effect of reducing the effective width of the base, thereby enhancing the tendency of the retention element 4 to bend away from the workpiece plane. Secondly, it has been empirically found that the auxiliary cut by having an angle different from 90° to the web cut causes a particularly favorable bending movement of the retention element 4. The angle β between the auxiliary cut and the web cut 6 is for example less than 80°, preferably between 5° and 30°.

In addition, it may be beneficial if the auxiliary cut 7 is made first in an outward (referring to the part 1) cutting direction (A), followed by the web cut 6 in a cutting direction (B) leading away from the angle β. Finally, the outline cut 5 is made, for example in a cutting direction (C) essentially parallel to the web cut cutting direction.

Depending on material sheet thickness, different parameters may be beneficial for an optimized retention element configuration. The parameters that may be varied include retention element length, base width, and presence and, if applicable, angle of the auxiliary cut. The ideal parameters may be determined empirically and/or by simulation.

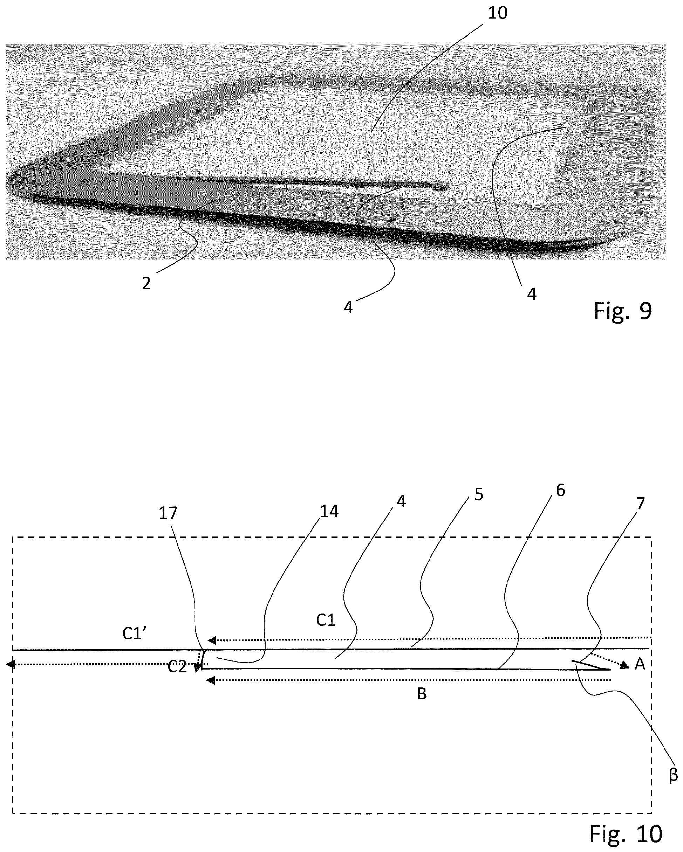

**Figures 8** **and** **9** each show a photograph of the workpiece remainder 2 of an embodiment based on the embodiment of Fig. 7 (workpiece material: mild steel sheet, thickness 1 mm) after the cut part has been removed from its location 10. Retention elements 4 have been bent downwards and inwardly such that the cut part (not shown) had been hold from below Fig. 9 shows the workpiece remainder 2 in an upside-down orientation to increase the visibility of the bending of the retention elements 4.

In a further variant of this method, illustrated in **Figure 10****,** the outline cut 5 in direction of arrow C1 is again made after the web cut 6, the latter being made in direction of arrow B and being made after the auxiliary cut 7 in direction of arrow A. However, the free end 14 of the retention element 4 is released by a separate release cut 17 in direction of arrow C2. Again, as the lateral movement can only take place completely when the retention element 4 has moved downwards by the height of the sheet metal, in which configuration the retention element 4 does not clamp the part 1 but moves with its free end 14 under the part 1. The outline cut 5 may be executed in one go (sequence of arrows C1 and C1' immediately one after the other). Alternatively, a first portion of the outline cut 5, symbolized by arrow C1, may be carried out before the release cut 17 is made, whereas a second portion of the outline cut (arrow C1'), downstream of the free end 14 of the retention element 4, is carried out after the release cut 17. Thus, the cutting sequence may be A, B, C1, C2 and then C1', or alternatively it may be A, B, C1, C1' and then C2.

The embodiments described hereinbefore are of the first group of embodiments, in which the retention elements have a thickness corresponding to the workpiece thickness, and in which the free ends of the retention elements move downward by at least a workpiece thickness to lie underneath the part.

The embodiments described hereinafter belong to the second group of embodiments, in which the retention element 4 has a support region 20 of reduced thickness ("retention lug").

In the second group of embodiments, the support region may especially be thinned by laser ablation, especially before the retention element 4 is released by an outline cut and/or by a separate release cut. Laser ablation is performed by the laser cutting machine in a manner similar to laser cutting, but with reduced energy input per area on which the laser beam impinges. This may for example be achieved by defocusing, pulsing the laser or other laser power reduction, and/or by increased velocity by which the laser beam moves relative to the workpiece. For example, by the technique of dynamic beam shaping, which is subject to a lot of literature and is known in the field, the energy input as a function of the position can be specifically adjusted. Also, the angle by which the laser beam impinges on the surface may be altered to a certain extent by (dynamic) beam shaping.

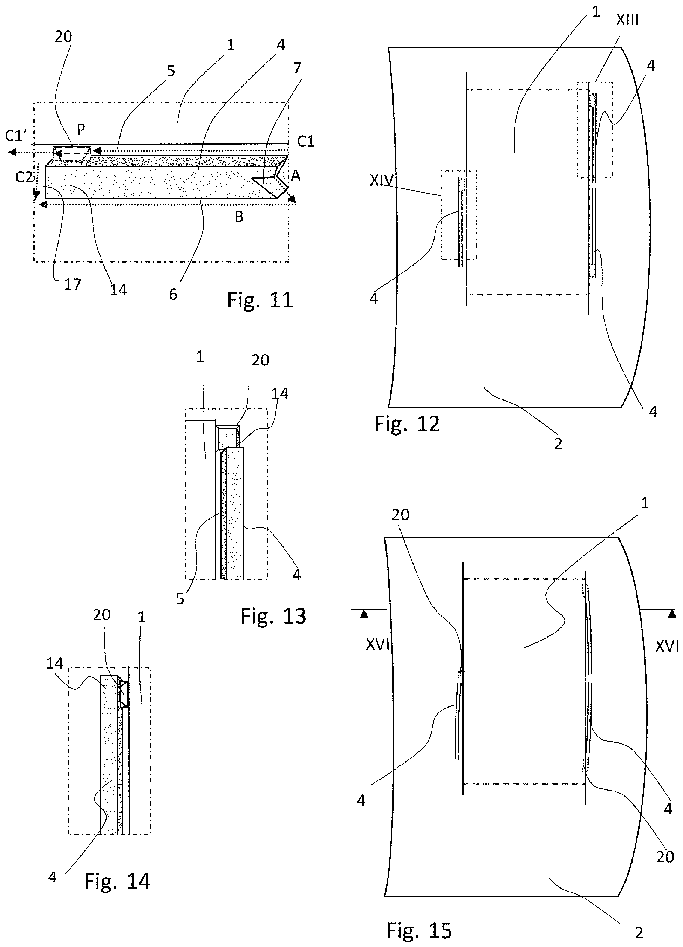

As illustrated in **Figure 11****,** the laser cutting method for cutting out a part 1 from a workpiece by a laser beam, may include the steps of laser-cutting of web cut 6 near an outline of the part 1 to be cut out from the workpiece and parallel thereto (arrow B) and laser-cutting of an outline cut 5 along the outline of the part 1 (arrows C1 an C1'), parallel to the web cut such that the part to be cut out is still attached to the workpiece (as in the embodiment of Fig. 10). The portion between the web cut and the outline cut forms the retention element 4. The outline cut 5 in this embodiment is interrupted to leave a web between the part 1 and the retention element 4 (between arrows C1 and C1'), at the fore end of the retention element. The method may further comprise the step of laser-ablating (arrow P in Fig 11) the web at the fore end of the retention element to form a retention lug 20 retention tip with a thickness in the propagation direction of the laser beam smaller than the thickness of the part to be cut and designed to be moved under the part to be cut by means of induced heat from the laser beam. By using a suitable technique, such as dynamic beam shaping and or by causing the laser beam to impinge from a non-vertical direction, the connection between the retention lug 20 and the part 1 is caused to be disconnected, i.e., a remaining thickness of the retention lug 20 may be close to zero at the interface to the part 1 so that after the subsequent release (see hereinafter) of the retention element 4, the retention lug may move relative to the part 1 in vertical directions.

The method may further comprise laser-cutting (arrow C2) of a release cut 17 alongside the fore end of the retention element 4, with the retention lug, and optional further laser heating the so formed retention element to move the fore end (free end 14) under the part to be cut. Depending on how many retention elements are desired, these steps a)-c) are repeated for other retention elements.

The retention lugs 20 at the respective free ends 14 of the retention elements move under the part 1 to form at least a one-point support structure for the part 1.

The method may optionally comprise the further step of finishing the laser cutting of the remaining outline of the part 1 to separate it completely from the workpiece if required.

A further optional step is the generation of an initial auxiliary cut 7 (arrow A; the auxiliary cut 7 may be made in the direction of arrow A), for example before the step of making the web cut 6 in direction of arrow B is performed.

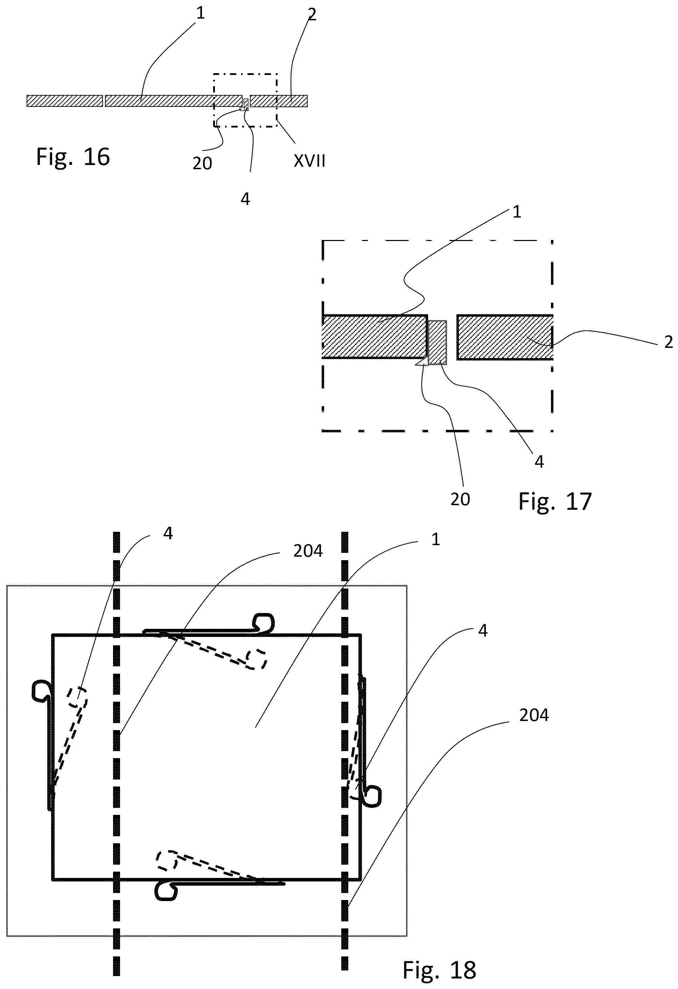

**Figure 12** shows a schematical view of a workpiece with a cut-out part 1 and a plurality of - differently configured - retention elements 4. The retention element 4 of the region XIII and shown in enlarged schematical view in **Figure 13** has a retention lug 20 laterally extending along a full width of the retention element's free end 14. It is created by performing a laser ablation step repeatedly on the area where the retention lug is to be formed. At the same time or subsequently, the free end 14 may be caused to be separated from the part 1. For example, by dynamic beam shaping it may be ensured that the largest energy input on the area of the retention lug is directly along the edge of the part 1 and is sufficient for the retention lug to break free from the part 1. The retention element 4 of the region XIV in Fig. 12 and shown in enlarged schematical view in **Figure 14** is based on the principle explained referring to Fig. 11. For both embodiments, it holds that when subsequently a release cut (c.f. Fig. 11) is made, the retention element, due to the anisotropic heating caused by the laser beam impinging from above, and if necessary, optionally, by additional energy input, for example by the processing laser beam being defocused and/or impinging with reduced average power, will move downwardly relative to the part and inwardly so that the retention lug 20 is partially underneath the part 1 thereby supporting it. This is also illustrated in **Figure 16** (showing a schematical cross section along plane XVI-XVI in **Figure 15**) and **Figure 17** (showing detail XVII of Fig. 16)

In embodiments of either group of embodiments, for positioning the retention elements, the positions of the cutting grid grate elements can be taken into account. For example, it may be ensured that the retention elements do not collide with the grate elements, although in other embodiments such collision can be accepted, as a collision does in most embodiments not cause the workpiece to be displaced in an undesired manner (the forces exerted by the bending of the retention elements are usually much too small for this). Also, depending on how a part 1 is already supported by one or more grate elements, the number and locations of retention elements will be defined.

Taking into account the position of the grate elements can be done during program creation using cam software or by an algorithm on the machine control.

**Figure 18** shows the part 1 as illustrated in Fig. 6 with retention elements as in Figure 2, with two cutting grid grate elements 204 being shown in dashed lines. It is apparent that the grate element 204 illustrated on the right-hand side is unfavorable and collides with the curved retention element 4 illustrated on the right-hand side. The other grate element 204, in contrast, is favorably positioned.

If the position of the grate elements is known, it is also possible to judge which retention elements are actually necessary to prevent parts from tilting. For example, the retention element 4 shown on the right-hand side might be unnecessary and therefore omitted, as the grate element 204 on the right-hand side and extending close to the outline of the part prevents tilting.

## Claims

1. A laser cutting method for cutting out a part (1) from a workpiece (112) that defines a workpiece plane, the method comprising the steps of arranging the workpiece so that the workpiece plane lies horizontally, of making a first cut (6) in the workpiece and of making a second cut (5) in the workpiece, wherein the second cut (5) is a cut along a contour of the part (1) and thereby delimits the part (1) and separates it from a workpiece remainder (2), and wherein the first cut (6) delimits, together with the second cut (5), a retention element (4) of the workpiece remainder (2), the retention element (4) being arranged next to the part and extending away from a workpiece remainder body, the method further comprising causing the retention element (4) to bend away from the workpiece plane in addition to bending inwardly towards the part in a position in which a portion (14, 20) of the retention element (4) is underneath the part (1) to support the part (4).

2. The laser cutting method according to claim 1, wherein the retention element (4) is elongate, with a long extension along the part and parallel to the second cut (5), being contiguous with the workpiece remainder body at a base end of the retention element (4), and an end of the retention element being opposite the base end being a free end.

3. The laser cutting method according to claim 2, wherein a width of the retention element (4) corresponds to between 0.3 times and 3 times a workpiece thickness, and wherein a length of the retention element corresponds to at least 10 times a workpiece thickness.

4. The laser cutting method according to claim 2 or 3, comprising the further step of making an auxiliary cut (7) connecting to the first cut (6) and extending, at the base end, towards the first cut (5) so as to reduce a width of the retention element at the base end.

5. The laser cutting method according to claim 4, wherein the auxiliary cut (7) is at an acute angle to the first cut (6).

6. The laser cutting method according to any one of claims 2 to 5, wherein the retention element (4) towards its free end is shaped such as to be undercut with respect to a bending towards the part (1).

7. The laser cutting method according to any one of the previous claims, wherein the first cut (6) is made before the second cut (5).

8. The laser cutting method according to any one of the previous claims, wherein the first cut (6) and the second cut (5) along the retention element (4) are made in a same cutting direction.

9. The laser cutting method according to any one of the previous claims, and comprising the step of making a release cut (17) after the step of making the first cut (6) and the second cut, the release cut (17) extending between the second cut (5) and the first cut (6) along the free end (14) of the retention element (4).

10. The laser cutting method according to any one of the previous claims, and comprising the step of locally removing material of the retention element (4) near the free end (14) to obtain a support region (20) of reduced thickness, wherein the step of locally removing material of the retention element (4) is carried out by laser ablation.

11. The laser cutting method according to any one of the previous claims, and comprising the further step of heating a portion the retention element (4) by laser radiation with an intensity not sufficient for ablating material from the workpiece.

12. The laser cutting method according to any one of the previous claims, wherein the step of arranging the workpiece (112) comprises arranging the workpiece on a workpiece support (200) comprising a plurality of grate elements (204), and wherein the position of the retention element (4) is defined so that the retention element (4) does not get into physical contact with any of the grate elements (204).

13. A flatbed laser cutting machine comprising a workpiece support (200) and a laser cutting head (110) equipped to emit a processing beam (121) towards a workpiece (112) supported by the workpiece support (200) and to be movable relative to the workpiece support (200), and an electronic control (130) for controlling a movement of the laser cutting head (110) relative to the workpiece support (200)as well as emission of the laser processing beam (121), the laser processing machine being programmed to carry out the method according to any one of the previous claims.

14. A computer program, stored on a data carrier and/or downloadable, comprising instructions to cause, when executed on a machine control of a flatbed laser cutting machine or on a computer from which data are transferred to the flatbed laser cutting machine, the laser cutting machine to carry out the method according to any one of claims 1-13.

15. A computer-readable data carrier having stored thereon the computer program according to claim 14 or a data carrier signal carrying the computer program according to claim 14.
